# EUROPÄISCHE PATENTSCHRIFT

(11) **EP 2 829 663 B1**
(45) Veröffentlichungstag und Bekanntmachung des Hinweises auf die Patenterteilung: **21.12.2016**
(21) Anmeldenummer: 13177451.5
(22) Anmeldetag: 22.07.2013
(51) Int. Cl.: B60R 3/00, E02F 9/08

(54) **Oberwagen für eine Baumaschine**
Upper structure for a construction machine
Tourelle pour un engin de chantier

(43) Veröffentlichungstag der Anmeldung: 28.01.2015
(60) Teilanmeldung: 16186947.4
(73) Patentinhaber: BAUER Maschinen GmbH, 86529 Schrobenhausen (DE)
(72) Erfinder: Roth, Stefan, 85238 Petershausen (DE); Lanzl, Martin, 85051 Ingolstadt (DE); Oehme, Ralf, 85053 Ingolstadt (DE); Kohl, Mathias, 85302 Strobenried (DE)
(74) Vertreter: Wunderlich, Rainer

(56) Entgegenhaltungen:
- EP-A1- 2 299 008
- WO-A1-2010/037185
- DE-A1- 10 253 542
- SU-A1- 546 555

## Beschreibung

Die Erfindung betrifft eine Baumaschine mit einem Raupenfahrwerk als Unterwagen und einem Oberwagen mit einem Gehäuse, welches Seitenwände aufweist, wobei zum Zugang in das Gehäuse mindestens eine Gehäuseöffnung mit einer Zugangswand vorgesehen ist, welche mittels eines Verstellmechanismus in eine Öffnungsposition verstellbar ist, und in einem Bereich vor der Gehäuseöffnung ein horizontaler Laufsteg gebildet ist, gemäß dem Oberbegriff des Anspruchs 1.

Derartige Oberwagen werden beispielsweise bei Erdbohrgeräten oder anderen Erdbearbeitungsmaschinen eingesetzt. Diese Baumaschinen weisen üblicherweise ein Fahrwerk, insbesondere ein Raupenfahrwerk, als Unterwagen auf, auf welchem ein Oberwagen fest oder drehbar angeordnet ist. Der Oberwagen kann somit einen erheblichen Abstand zur Bodenoberfläche aufweisen. Abhängig von der Größe des Unterwagens kann dieser üblicherweise 1 bis 2 m und auch mehr betragen. Im Oberwagen sind in der Regel die Antriebsaggregate angeordnet, etwa ein Dieselmotor, Hydraulikpumpen, ein Stromgenerator oder weitere Antriebe für Winden. Zu Wartungs- und Reparaturzwecken ist daher ein guter und sicherer Zugang in das Gehäuse des Oberwagens erforderlich.

Aus der DE 10 2009 050 189 A1 ist eine Baumaschine mit einem Oberwagen bekannt, bei welchem Gehäuseteile nach oben aufklappbar sind. Ein seitlicher Laufsteg mit Absturzsicherung ist fest entlang der Flanken des Gehäuses angeordnet. Derartige fest angeordnete Laufstege verringern aber entweder den Bauraum in dem Gehäuse oder vergrößern die Außenmaße der Baumaschine.

Ein Oberwagen mit einem ausklappbaren Laufsteg geht aus der JP 6-85148 A1 hervor. Der Laufsteg ist als ein Gitterrost ausgebildet, welcher außen an eine Seitenwand angelegt ist. Zum Aufbau des Laufsteges sind Stützen auszuschwenken und der Gitterrost ist nach unten zu klappen. Ein außenliegender Gitterrost beeinträchtigt das Erscheinungsbild des Oberwagens und ist zudem einer Verschmutzung ungeschützt ausgesetzt.

Aus der SU 546555 A1 ist ein Radfahrzeug mit einem Aufbau bekannt, bei welchem über verschiebbare Schienen, welche als Teleskopschienen bezeichnet werden können, eine Seitenwand horizontal ausziehbar ist. Nach dem Ausziehen kann eine vertikal gestellte Bodenplatte horizontal ausgeklappt werden.

Eine gattungsgemäße Baumaschine mit einem Raupenfahrwerk als Unterwagen und einem drehbar angebrachten Oberwagen geht etwa aus der EP 2 216 238 A1 hervor. Bei diesem Oberwagen sind vertikale Seitenwände über einen Verstellmechanismus vertikal nach oben fahrbar. Ein innenliegender geschützter Laufsteg kann dann in eine horizontale Position nach unten geklappt werden, um einen horizontalen Laufsteg zu bilden. Der Laufsteg kann erst nach der Öffnung der Zugangswand gebildet werden, was für die Handhabung sowie die Sicherheit des Bedienpersonals problematisch sein kann.

Der Erfindung liegt die **Aufgabe** zugrunde, einen Oberwagen anzugeben, welcher bei einem einfachen und kompakten Aufbau einen leichten und zugleich sicheren Aufbau eines Laufsteges ermöglicht.

Nach der Erfindung wird die Aufgabe durch die Merkmale des Anspruchs 1 gelöst. Bevorzugte Ausführungsformen der Erfindung sind in den abhängigen Ansprüchen angegeben.

Die erfindungsgemäße Baumaschine ist zum einen dadurch gekennzeichnet, dass mindestens ein Auszugselement vorgesehen ist, welches horizontal ausziehbar zwischen einer Einzugsposition und einer Auszugsposition gelagert ist, in welcher das Auszugselement unter Bildung horizontal aus dem Gehäuse vorsteht, und dass zum Bilden des Laufsteges an dem Auszugselement eine Bodenplatte vorgesehen ist. Eine Grundidee der Erfindung besteht darin, an zumindest einer der im Wesentlichen vertikalen Seitenwände ein horizontal ausziehbares Auszugselement vorzusehen. In der eingeschobenen Position ist das Auszugselement platzsparend im oder am Gehäuse gelagert. Ein horizontales Aus- oder Einschieben ist auch bei großen und schweren Auszugselementen mit relativ geringen Kräften zu bewirken. Dies kann motorisch oder manuell erfolgen. Das Auszugselement ist dabei so weit ausziehbar, dass ausreichend Raum für einen Laufsteg für das Bedienpersonal besteht.

Eine besonders einfache und robuste Anordnung wird nach der Erfindung dadurch erzielt, dass mindestens zwei Teleskopschienen vorgesehen sind, mit welchen das Auszugselement ausziehbar gelagert ist. Die zwei Teleskopschienen sind in den seitlichen Außenbereichen des Auszugselementes vorgesehen, so dass dieses ähnlich wie eine Schublade horizontal ausgezogen werden kann. Bei größeren Längen des Auszugselementes können auch in einem Mittenbereich eine oder mehrere Teleskopschienen vorgesehen sein. Eine Teleskopschiene umfasst vorzugsweise eine am Oberwagen befestigte Hohlschiene, in welcher eine innere Schiene axial verfahrbar gelagert ist. An der verfahrbaren Innenschiene ist das Auszugselement befestigt.

Eine bevorzugte Ausführungsform der Erfindung besteht darin, dass das Seitenwandelement einen Teil der Zugangswand bildet. In der horizontal ausgezogenen Öffnungsposition weist dieses Seitenwandelement weiterhin eine im Wesentlichen vertikale Position auf und kann so vorzugsweise eine Brüstung oder einen Teil der Brüstung als Absturzsicherung am Laufsteg bilden. Vorzugsweise ist das Seitenwandelement in der Einzugs- oder Verschlussposition außenliegend und bildet so einen Teil der äußeren Zugangswand, also der Seitenwand des Gehäuses. Das Seitenwandelement kann aber auch innenliegend angeordnet sein und von einem äußeren entfern- oder verstellbaren Außenwandelement der Zugangswand verdeckt sein.

Ein Aspekt der Erfindung ist weiterhin darin zu sehen, dass die Bodenplatte an oder auf den mindestens zwei Teleskopschienen gelagert ist. Die Teleskopschienen sind somit als Stützträger oder Stützrahmen für die Bodenplatte und damit den Laufsteg ausgebildet. Weitere oder zusätzliche Stützelemente sind bei dieser Ausführungsform nicht zwingend notwendig.

Nach der Erfindung ist es vorgesehen, dass die Bodenplatte an den Teleskopschienen angebracht und mit dem Aufziehen des Auszugselements ausfahrbar ist. Die Bodenplatte ist vorzugsweise fest an den Teleskopschienen angeordnet und befindet sich auch in der Verschlussposition in horizontaler Anordnung im oder an dem Gehäuse. Durch Ausziehen des Auszugselementes wird so ein fertiger Laufsteg gebildet, wobei ein vertikal stehendes Seitenwandelement als eine Brüstung zur seitlichen Absturzsicherung dienen kann.

Die Zugangswand kann ausschließlich aus dem Seitenwandelement bestehen oder aus mehreren Wandelementen aufgebaut sein. Die einzelnen Wandelemente können nebeneinander zum Bilden einer mehrschichtigen Zugangswand hintereinander angeordnet sein. Es ist bevorzugt, dass zum Bilden der Zugangswand oberhalb des Seitenwandelementes ein oberes Wandelement vorgesehen ist, welches zum Öffnen klappbar oder verschiebbar gelagert ist. Das obere Wandelement kann etwa vertikal nach oben schiebbar oder klappbar sein, um am Deckenbereich ein Brüstungselement zu bilden.

Nach einer Ausführungsform der Erfindung ist es besonders vorteilhaft, dass das obere Wandelement in der Öffnungsposition ein Schutzdach über dem Laufsteg bildet. Hierzu kann das obere Wandelement an seiner Oberseite klappbar am Deckenbereich des Oberwagens angelenkt sein und so in eine schräge oder gefaltete Position nach oben bewegt und dort mit einem Verriegelungsmechanismus fixiert werden. Auf diese Weise kann bei geöffnetem Gehäuse durch den Laufsteg mit Brüstung und das Schutzdach ein gegenüber Witterungsverhältnissen besonders geschützter Arbeitsraum gebildet werden. Ein Verstellmechanismus für die Zugangswand umfasst also in diesem Fall das ausziehbare Auszugselement mit dem unteren Seitenwandteil und einen Klappmechanismus für das obere Wandteil.

Zur weiteren Erhöhung der Arbeitssicherheit ist es nach einer Ausführungsform der Erfindung vorteilhaft, dass an dem Laufsteg und/oder einem Deckenbereich des Gehäuses ein aufstellbares Brüstungselement vorgesehen ist. Das Brüstungselement kann etwa an dem Seitenwandelement vorgesehen sein, um dieses gegebenenfalls zu erhöhen oder zusätzlich abzusichern. Auch kann das aufstellbare Brüstungselement an den Stirnseiten des Laufsteges vorgesehen sein. Das aufstellbare Brüstungselement kann einen Klapp- oder Schwenkmechanismus mit stangenförmigen Elementen oder ausziehbare Absperrseile oder Absperrketten aufweisen. Ein Brüstungselement am Deckenbereich kann den gebildeten Arbeitsraum zusätzlich schützen.

Sofern bei geöffneter Zugangswand die Gehäuseöffnung nicht unmittelbar an einer Fahrerkabine oder einen bestehenden Begehungsbereich des Oberwagens angrenzt, können ein oder mehrere weitere Auszugselemente vorgesehen sein. Dieses Auszugselement kann eine bloße verfahrbare Bodenplatte sein, welche zwischen einer Einzugsposition, in welcher der Auszugsboden in das Gehäuse eingefahren ist, und einer Auszugsposition verschiebbar ist. In der Auszugsposition kann der Auszugsboden an einen anderen gebildeten Laufsteg an der Gehäuseöffnung angrenzen. Es können ebenfalls aufstellbare und insbesondere ausklappbare Brüstungselemente vorgesehen sein.Selbstverständlich können bei Vorliegen eines Abstandsraumes zum Laufsteg auch auf andere Weise Bodenplatten ausgeklappt oder aufgelegt werden.

Die Erfindung umfasst eine Baumaschine mit einem Oberwagen und einem Unterwagen, welcher als ein Raupenfahrwerk ausgebildet ist, wobei die Baumaschine dadurch gekennzeichnet ist, dass der Oberwagen entsprechend der vorbeschriebenen Erfindung ausgebildet ist. Die Baumaschine ist insbesondere eine Baumaschine zum Tiefbau, insbesondere ein Erdbohrgerät, ein Rüttler oder eine Ramme, wie sie insbesondere für den Spezialtiefbau eingesetzt werden. Der Unterwagen ist mit Raupenketten versehen.

Nachfolgend wird die Erfindung anhand eines bevorzugten Ausführungsbeispieles weiter erläutert, welches schematisch in den beigefügten Zeichnungen dargestellt ist. In den Zeichnungen zeigen:
- Fig. 1: eine erste perspektivische Ansicht eines Oberwagens einer erfindungsgemäßen Baumaschine mit geschlossenen Zugangswänden;
- Fig. 2: eine weitere perspektivische Ansicht des Oberwagens nach Fig. 1 mit geschlossenen Zugangswänden;
- Fig. 3: eine perspektivische Ansicht des Oberwagens gemäß Fig. 1 mit geöffneten Zugangswänden;
- Fig. 4: eine perspektivische Ansicht des Oberwagens gemäß Fig. 2 mit geöffneten Zugangswänden; und
- Fig. 5: der Oberwagen gemäß Ansicht von Fig. 4 mit zusätzlich geöffneter Tür.

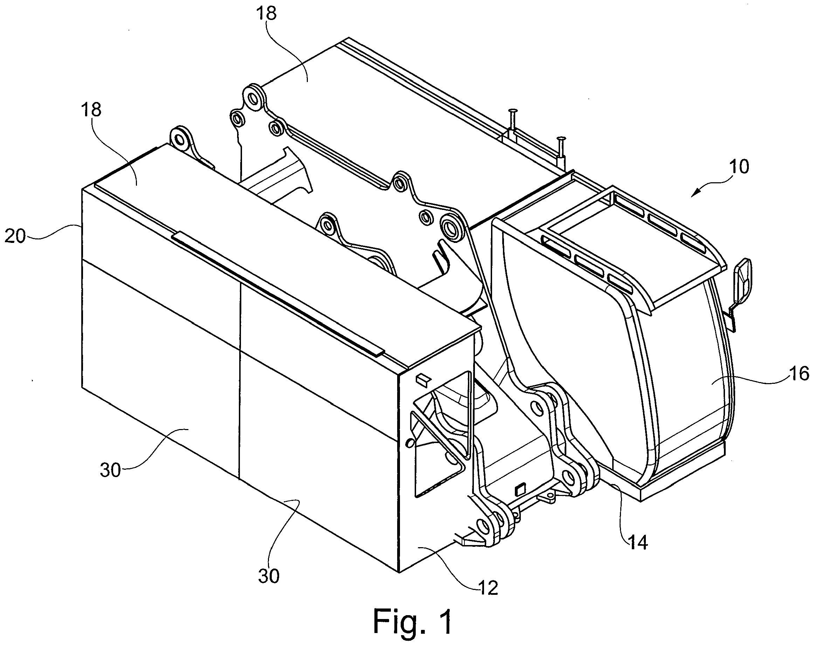

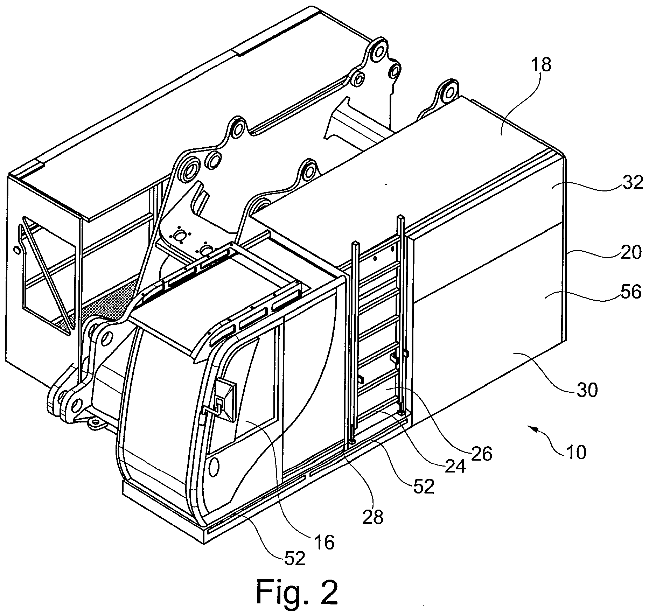

Ein Oberwagen 10 in einem geschlossenen Zustand, also mit geschlossenen Zugangswänden 30 ist in den Figuren 1 und 2 dargestellt. Der Oberwagen 10 umfasst ein kastenartiges Gehäuse 12, welches von einem Grundrahmen 14 getragen wird. Das kastenartige Gehäuse 12 umfasst Seitenwände 20, welche von einem Deckenbereich 18 oben geschlossen sind. Die Seitenwände 20 weisen zu öffnende Zugangswände 30 auf, welche nachfolgend näher erläutert werden.

An einer Vorderseite des Oberwagens 10 ist eine Fahrerkabine 16 angeordnet, wie es für verschiedenste Baumaschinen, insbesondere Erdbohrgeräte, bekannt ist.

Der dargestellte Oberwagen 10 ist weitgehend ohne Anbauelemente aus Gründen der Übersichtlichkeit dargestellt. In einem Mittenbereich des Gehäuses 12 können Seilwinden und ein Mast montiert werden. Innerhalb des Gehäuses 12 können verschiedenste Antriebs- und Steuerungskomponenten untergebracht werden, insbesondere ein Dieselantrieb, Hydraulikpumpen sowie ein wesentlicher Teil der Maschinensteuerung.

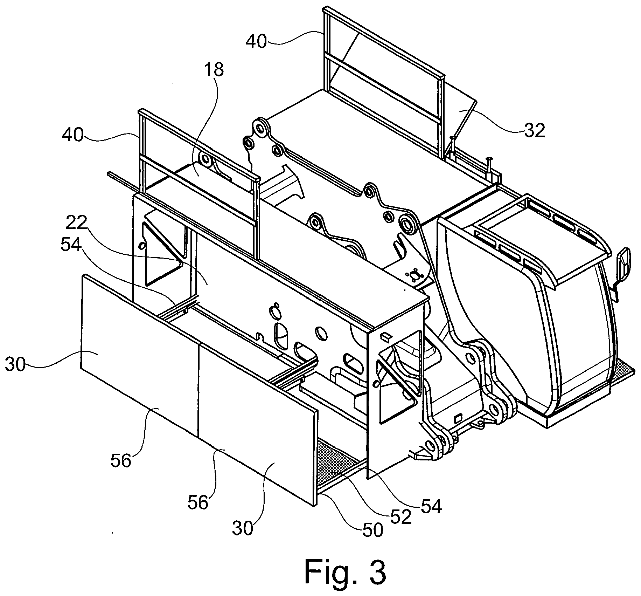

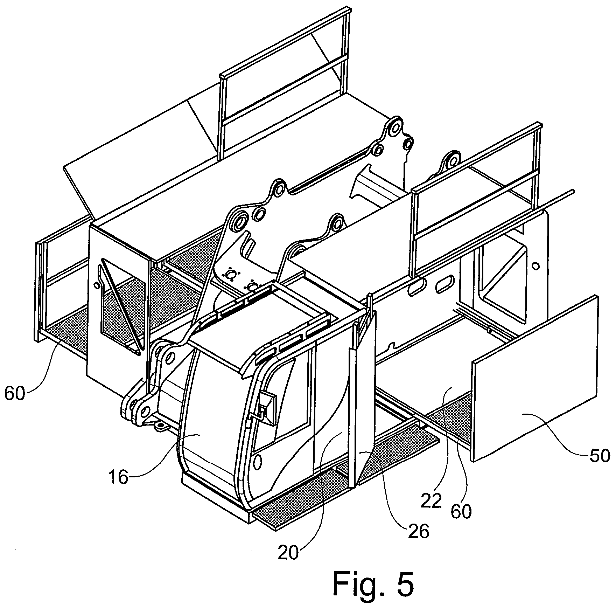

Der Oberwagen 10 wird auf einem Raupenfahrwerk angebracht. Aufgrund der erheblichen Größe derartiger Unterwägen an Baumaschinen ist der Zugang an das Gehäuse 12 von außen nicht ohne weiteres möglich. Die Zugangswände 30 können von einer in den Figuren 1 und 2 dargestellten Verschlussposition in eine Öffnungsposition gemäß den Figuren 3 bis 5 verstellt werden. Gemäß der Erfindung sind horizontal ausziehbare oder verschiebbare Auszugselemente 50 vorgesehen. Die Auszugselemente 50 weisen eine Bodenplatte 52 auf, welche bei den größeren Zugangswänden 30 mittels kugelgelagerter Teleskopschienen 54 zum horizontalen Verfahren vorgesehen sind. Ein horizontales Verfahren kann von Hand oder durch einen Stellmechanismus, welcher Spannfedern, einen Antriebsmotor oder einen Stellzylinder aufweisen kann, verfahren werden.

Durch Öffnen der Zugangswände 30 wird eine Gehäuseöffnung 22 am Gehäuse 12 bewirkt. Für einen sicheren Zugang zu der Gehäuseöffnung 22 weisen die im Wesentlichen vertikalen Zugangswände 30 ein unteres Seitenwandelement 56 auf, welches fest an den Teleskopschienen 54 angeordnet ist. An den Teleskopschienen 54 ist in dem dargestellten Ausführungsbeispiel auch jeweils eine gitterrostartige Bodenplatte 52 angeordnet. Bei dieser Ausführung wird gleichzeitig mit dem Öffnen des Gehäuses 12 durch Ausschieben des Seitenwandelementes 56 die Bodenplatte zum Bilden eines Laufsteges ausgefahren.

Ein oberes Wandelement 32 der Zugangswand 30 ist an einem Deckenbereich 18 schwenkbar gelagert, so dass dieses zum Vergrößern der Gehäuseöffnung 22 nach oben schwenkbar ist. Das obere Wandelement 32 kann vorzugsweise in einer schräggestellten Position fixiert werden, so dass das obere Wandelement 32 ein Schutzdach über den geöffneten Arbeitsraum am Gehäuse 12 bildet. Dies ist insbesondere bei schlechten Witterungsverhältnissen vorteilhaft.

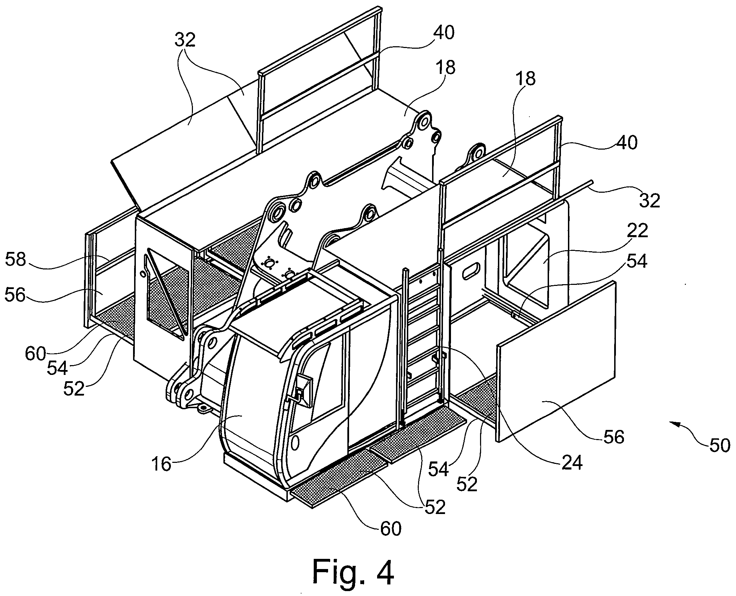

Das ausgezogene Seitenwandelement 56 bildet in der ausgezogenen Position gleichzeitig eine Brüstung. Hierzu kann, wie insbesondere aus Fig. 4 zu ersehen, an der Innenseite des Seitenwandelementes 56 ein Versteifungsrahmen 58 vorgesehen sein.

Als eine weitere Sicherungsmaßnahme kann am Deckenbereich 18 oberhalb der Gehäuseöffnung 22 ein ausklappbares oder aufstellbares Brüstungselement 18 aufgebaut werden. Das Brüstungselement 18 stellt sicher, dass insbesondere keine Personen in den geöffneten Arbeitsraum fallen.

Im Bereich der Fahrerkabine 16 sowie an einem Bereich mit einer Leiter 24 zum Deckenbereich 18 kann das Auszugselement 50 als einfach ausziehbare Bodenplatte 52 ausgebildet sein. Durch die so aneinandergrenzenden Bodenplatten 52 kann ein durchgehender Laufsteg 60 gebildet werden. Im Bereich der Leiter 24 kann eine Seitenwand 20 als ein Türelement 26 ausgebildet sein, welches um Scharniere 28 um eine vertikale Schwenkachse schwenkbar ist. Nach Abschluss der Wartungs- oder Bedienarbeiten können die Auszugselemente 50 ohne größeren Kraftaufwand motorisch oder manuell von der ausgezogenen Position wieder in die eingefahrene Position gemäß den Figuren 1 und 2 zurückgestellt werden. In dieser eingefahrenen Einzugsposition sind insbesondere die Bodenplatten 52 vor Verschmutzung oder Beschädigung geschützt.

## Patentansprüche

1. Baumaschine mit einem Raupenfahrwerk als Unterwagen und einem Oberwagen (10) mit einem Gehäuse (12), welches Seitenwände (20) aufweist, wobei zum Zugang in das Gehäuse (12) mindestens eine Gehäuseöffnung (22) mit einer Zugangswand (30) vorgesehen ist, welche mittels eines Verstellmechanismus in eine Öffnungsposition verstellbar ist, und in einem Bereich vor der Gehäuseöffnung (22) ein horizontaler Laufsteg (60) gebildet ist,
wobei,
- mindestens ein Auszugselement (50) vorgesehen ist, welches ein Seitenwandelement (56) und eine Bodenplatte (52) aufweist,
wobei
- mindestens zwei Teleskopschienen (54) vorgesehen sind, an denen die Bodenplatte (52) horizontal angebracht ist, und
- wobei das Auszugselement (50) mittels der Teleskopschienen (54) horizontal ausziehbar zwischen einer Einzugsposition, in welcher die Gehäuseöffnung (22) durch das Seitenwandelement (56) und die horizontale Bodenplatte (52) verschlossen ist, und einer Auszugsposition gelagert ist, in welcher das Auszugselement (50) horizontal aus dem Gehäuse (12) vorsteht, wobei die Gehäuseöffnung (22) an dem Gehäuse (12) offen ist und durch die horizontale Bodenplatte (52) ein Laufsteg (60) gebildet ist.

2. Baumaschine nach Anspruch 1,
**dadurch gekennzeichnet,**
**dass** die mindestens zwei Teleskopschienen (54) kugelgelagert sind.

3. Baumaschine nach Anspruch 1 oder 2,
**dadurch gekennzeichnet,**
**dass** das Seitenwandelement (56) einen Teil der Zugangswand (30) zu der Gehäuseöffnung (22) bildet.

4. Baumaschine nach Anspruche 3,
**dadurch gekennzeichnet,**
**dass** zum Bilden der Zugangswand (30) oberhalb des Seitenwandelementes (56) ein oberes Wandelement (32) vorgesehen ist, welches zum Öffnen klappbar oder verschiebbar gelagert ist.

5. Baumaschine nach Anspruch 4
**dadurch gekennzeichnet,**
**dass** durch das obere Wandelement (32) in der Öffnungsposition ein Schutzdach über dem Laufsteg (60) gebildet ist.

6. Baumaschine nach einem der Ansprüche 1 bis 5, **dadurch gekennzeichnet,**
**dass** an dem Laufsteg (60) und/oder einem Deckenbereich (18) des Gehäuses (12) ein aufstellbares Brüstungselement (40) vorgesehen ist.

7. Baumaschine nach einem der Ansprüche 1 bis 6, **dadurch gekennzeichnet,**
**dass** an dem Gehäuse (12) mehrere Auszugselemente (50) vorgesehen sind.

## Claims

1. Construction machine having a running gear as an under carriage and an upper carriage (10) with a housing (12) having side walls (20), wherein for access into the housing (12) at least one housing opening (22) with an access wall (30) is provided, which is adjustable by means of an adjustment mechanism into an open position, and in an area in front of the housing opening (22) a horizontal gangway (60) is formed,
- wherein at least one pull-out element (50) is provided which has a side wall element (56) and a base plate (52),
- wherein at least two telescopic rails (54) are provided at which the base plate (52) is attached horizontally, and
- wherein the pull-out element (50) is mounted by means of the telescopic rails (54) so that it can be pulled out horizontally between a retracted position, in which the housing opening (22) is closed by the side wall element (56) and the horizontal base plate (52), and a pulled out position, in which the pull-out element (50) projects horizontally from the housing (12), wherein the housing opening (22) of the housing (12) is open and a gangway (60) is formed by the horizontal base plate (52).

2. Construction machine according to claim 1,
**characterized in that**
at least two telescopic rails (54) are mounted on ball bearings.

3. Construction machine according to claim 1 or 2,
**characterized in that**
the side wall element (56) forms at least a part of the access wall (30) to the housing opening (22).

4. Construction machine according to claim 3,
**characterized in that**
for forming the access wall (30) an upper wall element (32) is provided above the side wall element (56) which, to enable its opening, is supported in a folding or displaceable manner.

5. Construction machine according to claim 4,
**characterized in that**
in the open position a protective roof is formed above the gangway (60) by the upper wall element (32).

6. Construction machine according to any one of claims 1 to 5,
**characterized in that**
on the gangway (60) and/or a ceiling area (18) of the housing (12) a mountable railing element (40) is provided.

7. Construction machine according to any one of claims 1 to 6,
**characterized in that**
on the housing (12) several pull-out elements (50) are provided.

## Revendications

1. Engin de chantier comprenant un train de roulement à chenilles comme châssis et une tourelle (10) comprenant une carcasse (12) présentant des parois latérales (20), dans lequel, il est prévu pour accéder à l'intérieur de la carcasse (12), au moins une ouverture de carcasse (22) avec une paroi d'accès (30), qui peut être déplacée dans une position d'ouverture au moyen d'un mécanisme de déplacement, et dans lequel une passerelle (60) horizontale est formée dans un espace devant l'ouverture de carcasse (22),
dans lequel :
- il est prévu au moins un élément extractible (50), lequel élément présente un élément de paroi latérale (56) et une plaque de base (52),
- il est prévu au moins deux rails télescopiques (54) sont prévus, auxquels la plaque de base (52) est fixée horizontalement, et
- dans lequel l'élément extractible (50) peut être extrait horizontalement, au moyen des rails télescopiques (54), entre une position d'insertion, dans laquelle l'ouverture de carcasse (22) est fermée par l'élément de paroi latérale (56) et la plaque de base (52) horizontale, et une position d'extraction, dans laquelle l'élément extractible (50) fait saillie horizontalement de la carcasse (12), dans lequel l'ouverture de carcasse (22) est ouverte au niveau de la carcasse (12) et une passerelle (60) est formée par la plaque de base (52) horizontale.

2. Engin de chantier selon la revendication 1, **caractérisé en ce que** les au moins deux rails télescopiques (54) sont montés sur palier à billes.

3. Engin de chantier selon l'une des revendications 1 ou 2, **caractérisé en ce que** l'élément de paroi latérale (56) forme une partie de la paroi d'accès (30) à l'ouverture de carcasse (22).

4. Engin de chantier selon la revendication 3, **caractérisé en ce qu'**un élément de paroi supérieur (32) est prévu au-dessus de l'élément de paroi latérale (56) pour former la paroi d'accès (30), lequel est monté de manière repliable ou mobile pour l'ouverture.

5. Engin de chantier selon la revendication 4, **caractérisé en ce qu'**un toit de protection au-dessus de la passerelle (60) est formé par l'élément de paroi supérieur (32) en position ouverte.

6. Engin de chantier selon l'une quelconque des revendications 1 à 5, **caractérisé en ce qu'**un élément de balustrade (40) déployable est prévu au niveau de la passerelle (60) et/ou de la zone de plafond (18) de la carcasse (12).

7. Engin de chantier selon l'une quelconque des revendications 1 à 6, **caractérisé en ce que** plusieurs éléments extractibles (50) sont prévus au niveau la carcasse (12).
